# EUROPÄISCHE PATENTANMELDUNG

(11) **EP 1 967 785 A1**
(43) Veröffentlichungstag der Anmeldung: **10.09.2008**
(21) Anmeldenummer: 08001465.7
(22) Anmeldetag: 26.01.2008
(51) Int. Cl.: F16N 11/10, H01M 8/06, C01B 3/02

(54) **Verfahren zur Abgabe von Schmiermitteln sowie Gaserzeugungselement zur Durchführung des Verfahrens**

(30) Priorität: 05.03.2007 DE 102007010518
(71) Anmelder: Perma-Tec GmbH & Co. KG, 97717 Euerdorf (DE)
(72) Erfinder: Eisenbacher, Egon, 97753 Karlstadt (DE); Glier, Robert, 97520 Röthlein (DE)
(74) Vertreter: Albrecht, Rainer Harald

(57) **Zusammenfassung**

Verfahren zur Abgabe von Schmiermitteln unter Verwendung eines Schmierstoffspenders (1), der in einem Gehäuse (2) ein an einen Gehäuseauslass (3) angeschlossenes Schmierstoffreservoir (5) und einen an das Schmierstoffreservoir (5) angrenzenden, Elektrolytflüssigkeit (7) aufnehmenden Gaserzeugungsbereich (8) aufweist. Zum Starten der Schmierstoffabgabe wird ein galvanisches Gaserzeugungselement (12) in die Elektrolytflüssigkeit (7) eingebracht, wobei der Schmierstoff unter dem Druck eines Gases, welches durch eine elektrochemische Zersetzung des Gaserzeugungselementes (12) entsteht, aus dem Schmierstoffreservoir (5) durch den Gehäuseauslass (3) ausgepresst wird.
Zusätzlich enthält das Gaserzeugungselement (12) eine Zusatzkomponente (14a,14b), welche zeitweise eine Erhöhung der Gaserzeugungsrate bewirkt. Die Zusatzkomponente (14a) zersetzt sich gleichzeitig mit den Basismetallen (13), die Zusatzkomponente (14b) ist dagegen so angeordnet, dass sie sich verzögert zersetzt. Die Zusatzkomponente (14a,14b) besteht beispielsweise aus Magnesium, Aluminium oder Silizium.

## Beschreibung

Die Erfindung betrifft ein Verfahren zur Abgabe von Schmiermitteln unter Verwendung eines Schmierstoffspenders, der in einem Gehäuse ein an einen Gehäuseauslass angeschlossenes Schmierstoffreservoir und einen an das Schmierstoffreservoir angrenzenden, eine Elektrolytflüssigkeit aufnehmenden Gaserzeugungsbereich aufweist. Zum Starten der Schmierstoffabgabe wird ein galvanisches Gaserzeugungselement in die Elektrolytflüssigkeit eingebracht, wobei durch eine elektrochemische Zersetzung des Gaserzeugungselementes in der Elektrolytflüssigkeit ein Gas erzeugt wird. Unter dem Druck des durch die Reaktion entstehenden Gases wird der Schmierstoff aus dem Schmierstoffreservoir durch den Gehäuseauslass ausgepresst.

Ein Verfahren mit den eingangs beschriebenen Merkmalen ist aus der DE 42 09 776 C2 bekannt, wobei der Gaserzeugungsbereich und das Schmierstoffreservoir von einem Kolben getrennt sind. Das Gehäuse weist im Gaserzeugungsbereich eine Magazinaufnahme auf, die durch eine Trennwand verschlossen ist. Um den Schmierstoffspender zu aktivieren, wird ein Magazin mit einem galvanischen Gaserzeugungselement in die Magazinaufnahme eingeschraubt, wobei die Trennwand zerstört und das galvanische Gaserzeugungselement in die Elektrolytflüssigkeit eingebracht wird. Das galvanische Gaserzeugungselement besteht typischerweise aus zwei Metallen oder Metalllegierungen, die elektrisch leitend miteinander verbunden sind, wobei das unedlere Metall mit dem negativeren Normalpotenzial als Anode und das edlere Metall als Kathode wirkt. Während von der Anode Elektronen an die Kathode und Metallionen an die Elektrolytflüssigkeit abgegeben werden, wird durch den Ladungsaustausch zwischen der Elektrolytflüssigkeit und der Kathode Gas erzeugt. Unmittelbar nachdem das galvanische Gaserzeugungselement in die Elektrolytflüssigkeit eingebracht ist, ist im Gaserzeugungsbereich ein Luftvolumen unter atmosphärischem Druck vorhanden, welches durch das zu erzeugende Gas zumindest auf den Druck komprimiert werden muss, der zur Überwindung der Reibung am Kolben nötig ist. Bis zum Erreichen des zur Bewegung des Kolbens erforderlichen Druckes wird kein Schmiermittel abgegeben, so dass die Gefahr einer Mangelschmierung besteht.

Des Weiteren wird in der Praxis beobachtet, dass die Viskosität des Schmiermittels mit zunehmender Schmierdauer beispielsweise aufgrund einer teilweisen Phasentrennung in dem Schmiermittel zunimmt. Bei der Zunahme der Schmiermittelviskosität ist im Gaserzeugungsbereich ein höherer Druck erforderlich, um den Kolben zu bewegen und das Schmiermittel durch den Gehäuseauslass auszupressen, wodurch bei einer konstanten Gaserzeugungsrate der Schmiermittelfluss reduziert wird. Zu berücksichtigen ist dabei auch, dass aufgrund des bei fortschreitender Entleerung des Schmierstoffreservoirs größeren mit Gas ausgefüllten Volumens die Druckerhöhung vergleichsweise langsam erfolgt und der Schmierstoffspender in Bezug auf Druckänderungen gleichsam ein weiches Verhalten aufweist.

Aus der DE 38 11 469 C2 ist ein Schmierstoffspender bekannt, bei dem ein galvanisches Gaserzeugungselement in einem Magazin angeordnet und von einer Folie abgedeckt ist. Bei der Inbetriebnahme des Schmierstoffspenders muss zunächst die Folie zerstört oder zersetzt werden. Um bei der Inbetriebnahme des Schmierstoffspenders eine Mangelschmierung zu vermeiden, wird vorgeschlagen, die Folie aus einem elektrochemisch aktiven Material wie z. B. Aluminium zu fertigen, welches bei einer Benetzung mit der Elektrolytflüssigkeit unter Freisetzen eines Gases zerstört wird und dadurch einen Druckanstieg im Gaserzeugungsbereich bewirkt. Erst nach einer weitreichenden Zersetzung der Folie kommt die Elektrolytflüssigkeit mit dem galvanischen Gaserzeugungselement in Kontakt. Die Zersetzung und insbesondere das Aufbrechen der Folie ist allerdings nicht reproduzierbar. Des Weiteren ist das beschriebene Verfahren verbesserungsbedürftig, da die Elektrolytflüssigkeit zunächst nur an der dem Gaserzeugungsbereich zugewandten Seite der Folie wirken kann. Auch eine Mangelschmierung durch eine Erhöhung der Viskosität des Schmiermittels zum Ende der Schmierdauer kann nicht vermieden werden.

Vor diesem Hintergrund liegt der Erfindung die Aufgabe zugrunde, ein Verfahren zur Abgabe von Schmiermitteln unter Verwendung eines Schmierstoffspenders anzugeben, welches eine gleichmäßigere Schmiermittelabgabe ermöglicht und insbesondere die Gefahr einer Mangelschmierung reduziert.

Ausgehend von einem Verfahren mit den Merkmalen des Oberbegriffes des Patentanspruches 1 wird die Aufgabe erfindungsgemäß dadurch gelöst, dass gleichzeitig mit dem galvanischen Gaserzeugungselement eine Zusatzkomponente in die Elektrolytflüssigkeit eingebracht wird, die während eines bezogen auf die gesamte Betriebsdauer kürzeren Zeitraumes in der Elektrolytflüssigkeit unter Gaserzeugung zersetzt wird und dadurch zeitweise eine Erhöhung der Gaserzeugungsrate bewirkt. Die Zusatzkomponente kann ebenso wie das Gaserzeugungselement aus einer galvanisch aktiven Materialzusammensetzung mit einer erhöhten Zersetzungsrate oder aus einer heftig mit der Elektrolytflüssigkeit reagierenden Substanz bestehen. Die Zusatzkomponente ist abhängig von der Art der Elektrolytflüssigkeit auszuwählen. So werden beispielsweise in einer Säure unedle Metalle mit einem negativen Normalpotenzial zersetzt, wobei typischerweise die Reaktionsgeschwindigkeit für verschiedene Metalle mit zunehmend negativem Normalpotenzial zunimmt. Vor diesem Hintergrund ist in einer sauren Lösung beispielsweise Magnesium mit einem Normalpotenzial von -2,37 V im besonderen Maße als Zusatzkomponente geeignet. Bei einer alkalischen Elektrolytflüssigkeit sind dagegen aufgrund ihrer Reaktionseigenschaften beispielsweise Aluminium und Silizium geeignet.

Um zu Beginn der Schmierstoffabgabe eine Mangelschmierung zu vermeiden, ist in einer bevorzugten Ausgestaltung des erfindungsgemäßen Verfahrens vorgesehen, dass die Zusatzkomponente bei Aktivierung des Schmierstoffgebers der Elektrolytflüssigkeit unmittelbar ausgesetzt wird und während der Dauer einer Startphase zersetzt wird. Die Menge der Zusatzkomponente wird zweckmäßigerweise so gewählt, dass durch die Zersetzung der Zusatzkomponente in der Startphase der erforderliche Arbeitsdruck des Schmierstoffspenders erreicht wird.

Die Zusatzkomponente kann im Rahmen der Erfindung zu Beginn der Schmierstoffabgabe gemeinsam mit dem galvanischen Gaserzeugungselement als separate Tablette in die Elektrolytflüssigkeit eingebracht werden. Besonders bevorzugt ist eine Ausgestaltung, bei der das galvanische Gaserzeugungselement und das Material der Zusatzkomponente miteinander verbunden sind.

Alternativ oder zusätzlich zu der unmittelbaren Bereitstellung des Arbeitsdruckes zu Beginn der Schmierstoffabgabe durch die Zusatzkomponente kann im Rahmen der Erfindung vorgesehen sein, dass die Zusatzkomponente bzw. eine zweite Zusatzkomponente innerhalb des Gaserzeugungselementes gekapselt angeordnet wird, wobei die Zersetzung der Zusatzkomponente bzw. der zweiten Zusatzkomponente nach einem zumindest teilweisen Verbrauch des galvanischen Gaserzeugungselementes bei fortschreitender Entleerung des Schmierstoffreservoirs einsetzt. Für einen bezogen auf die gesamte Schmierdauer begrenzten Zeitraum wird dadurch zum Ende des Schmiervorganges eine Erhöhung der Gaserzeugungsrate bewirkt, so dass bei einer in der Praxis häufig beobachteten Zunahme der Viskosität des Schmiermittels eine Mangelschmierung verhindert werden kann. Die Zusatzkomponente bzw. die zweite Zusatzkomponente kann in dem galvanischen Gaserzeugungselement umschlossen sein, so dass die Elektrolytflüssigkeit erst bei einer fortschreitenden Zersetzung des Gaserzeugungselementes zu der Zusatzkomponente bzw. der zweiten Zusatzkomponente gelangt. Des Weiteren kann auch eine separate Kapselung oder Umhüllung, beispielsweise auf organischer Basis, vorgesehen sein, die langsam von der Elektrolytflüssigkeit zersetzt wird.

Gegenstand der Erfindung ist auch ein Gaserzeugungselement für einen Schmierstoffspender zur Durchführung des beschriebenen Verfahrens. Das erfindungsgemäße Gaserzeugungselement weist einen zwei Basismetalle enthaltenden Körper auf, wobei das edlere der beiden Basismetalle in einer Elektrolytflüssigkeit als Kathode und das unedlere Basismetall als Anode wirkt, so dass in der Elektrolytflüssigkeit eine elektrochemische Gaserzeugungsreaktion abläuft und wobei der Körper eine reaktive Zusatzkomponente aufweist, die in der Elektrolytflüssigkeit unter Gaserzeugung in einem kürzeren Zeitraum als die Basismetalle verbraucht wird. Der Erfindung liegt dabei die Idee zugrunde, dass durch die Zusammensetzung und den Aufbau des Gaserzeugungselementes die Gaserzeugungsraten in verschiedenen Phasen des Schmierprozesses entsprechend den Erfordernissen genau angepasst werden können. Um bei dem Einsatz in einem Schmierstoffspender zu Beginn der Schmierstoffabgabe eine schnelle Bereitstellung des Arbeitsdruckes zu ermöglichen, kann die Zusatzkomponente an der Oberfläche des vorzugsweise tabletten- oder kugelförmigen Körpers frei liegen, wobei die Zusatzkomponente ohne Einschränkung lediglich an einem Teil der Oberfläche oder als Außenschicht des Körpers vorgesehen sein kann. Während bei einer lediglich teilweisen Bedeckung der Oberfläche die langsame Gaserzeugungsreaktion durch elektrochemische Zersetzung der Basismetalle und die schnelle Gaserzeugungsreaktion durch den Aufbrauch der Zusatzkomponente bei dem Eintauchen des Gaserzeugungselementes in eine Elektrolytflüssigkeit gleichzeitig einsetzen, setzt die langsame Gaserzeugungsreaktion bei einer vollständigen Ummantelung des Körpers verzögert ein. Als Material für die Zusatzkomponente sind insbesondere Magnesium bei einer sauren Elektrolytlösung und Aluminium oder Silizium bei einer alkalischen Lösung geeignet, wobei auch Mischungen oder Legierungen eingesetzt werden können.

Als Basismetalle werden in einer sauren Elektrolytflüssigkeit vorzugsweise Zink und Molybdän oder auch Zink und Kupfer verwendet. Im Rahmen der Erfindung liegt jedoch auch die Verwendung von Metalllegierungen oder von mehr als zwei unterschiedlichen Metallen. Vorzugsweise ist der Körper des Gaserzeugungselementes aus pulverförmig vorliegenden Materialien gepresst. Ein aus gepresstem Pulver gebildeter Körper weist bei dem Betrieb eine große aktive Oberfläche auf und ist auf besonders einfache Weise zu fertigen, wobei das Mischungsverhältnis der pulverförmigen Materialien zur Realisierung unterschiedlicher Gaserzeugungsraten besonders leicht zu variieren ist.

Zusätzlich oder alternativ zu der Anordnung einer Zusatzkomponente an der Oberfläche des Körpers kann im Rahmen der Erfindung auch eine Zusatzkomponente als Kern des Körpers vorgesehen sein, welche von den Basismetallen umgeben ist. Die Zusatzkomponente im Kern des Körpers erlaubt eine gezielte Erhöhung der Gaserzeugungsrate zum Ende der Schmierdauer, wodurch auch beim Anstieg der Viskosität des Schmiermittels ein ausreichender Schmiermittelstrom bereitgestellt werden kann. Neben den bereits beschriebenen Stoffen Magnesium, Aluminium und Silizium kann als Zusatzkomponente im Kern des Körpers auch eine galvanisch aktive Materialkombination vorgesehen sein, die von der Elektrolytflüssigkeit elektrochemisch zersetzt wird. So kann die Zusatzkomponente beispielsweise aus Materialien gebildet sein, die im Wesentlichen den Materialien der Basismetalle entsprechen, wobei die Mischung der Materialien aufgrund einer abweichenden Mischungszusammensetzung in der Zusatzkomponente reaktionsfreudiger als die Mischung der Basismetalle ist und/oder wobei die Zusatzkomponente eine Beimischung aus einem reaktiven Stoff wie Magnesium, Aluminium oder Silizium enthält.

Der Körper kann in mehreren Schritten gebildet werden, wobei beispielsweise zunächst ein Kern, nachfolgend die Basismetalle, welche den Kern umgeben und schließlich eine weitere Zusatzkomponente an der Oberfläche des Körpers angeordnet werden. Im Rahmen der Erfindung ist auch eine Zusatzkomponente als Kern vorgesehen, die aus einem losen, nicht gepressten Pulver gebildet ist.

Die Erfindung wird im Folgenden anhand einer lediglich ein Ausführungsbeispiel darstellenden Zeichnung erläutert; es zeigen:
- Fig. 1: den schematischen Aufbau eines Schmierstoffspenders zur Durchführung des erfindungsgemäßen Verfahrens,
- Fig. 2a und 2b: eine Detailansicht alternativer Ausgestaltungen des in Fig. 1 dargestellten Schmierstoffspenders,
- Fig. 3a und 3b: Gaserzeugungselemente für einen Schmierstoffspender zur Durchführung des erfindungsgemäßen Verfahrens,
- Fig. 4: den zeitlichen Verlauf der Gaserzeugungsrate und des Druckes in dem Gaserzeugungsbereich eines Schmierstoffspenders sowie des Schmierstoffdurchflusses durch den Gehäuseauslass.

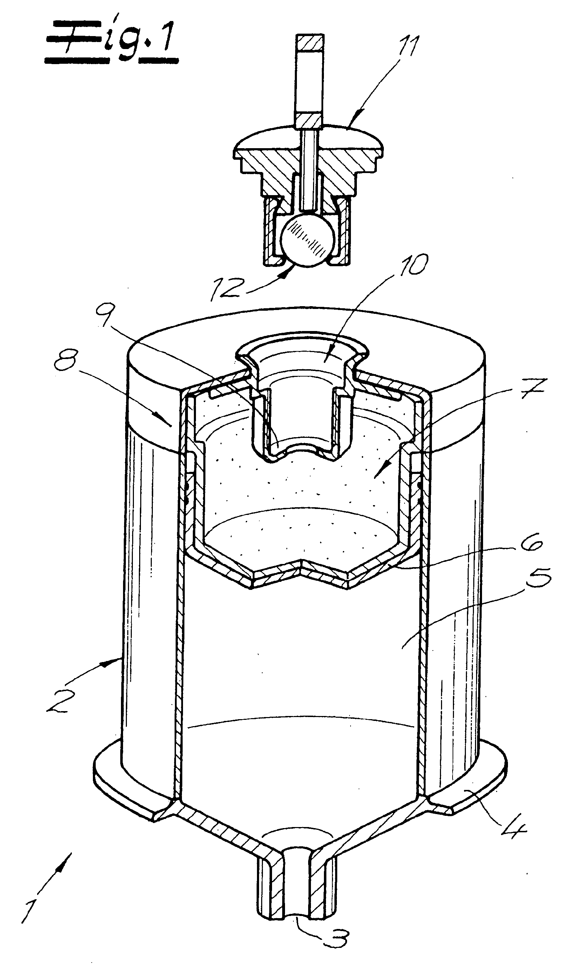

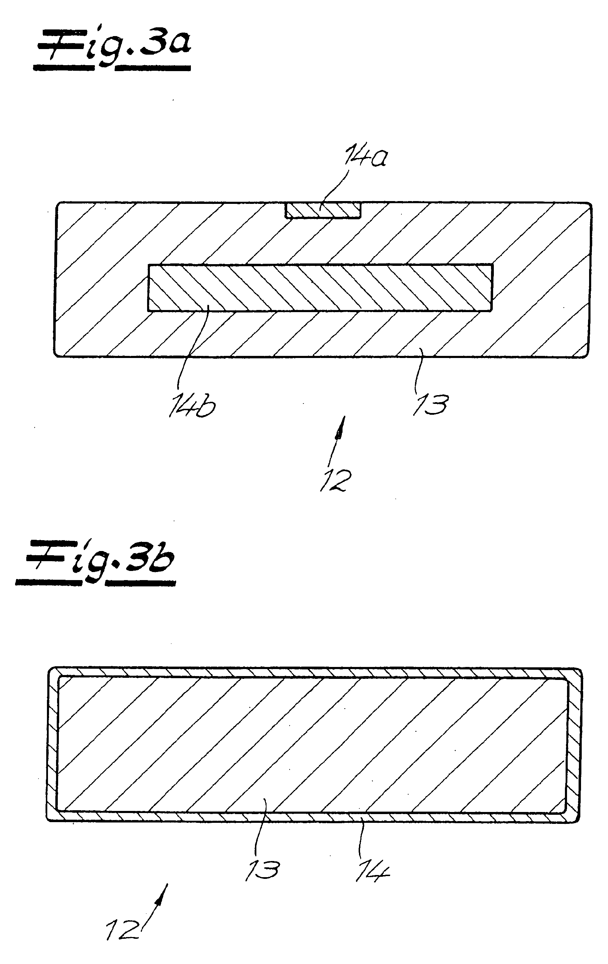

Fig. 1 zeigt den grundsätzlichen Aufbau eines Schmierstoffspenders 1 zur Durchführung des erfindungsgemäßen Verfahrens. Der Schmierstoffspender 1 weist ein Gehäuse 2 mit einem Gehäuseauslass 3 an einem bodenseitigen Deckel 4 auf. An den Gehäuseauslass 3 ist ein Schmierstoffreservoir 5 angeschlossen, wobei das Schmierstoffreservoir 5 durch einen Kolben 6 von einem mit Elektrolytflüssigkeit 7 gefüllten Gaserzeugungsbereich 8 getrennt ist. Im Gaserzeugungsbereich 8 ist eine durch eine Trennwand 9 verschlossene Magazinaufnahme 10 angeordnet. Um eine Schmierstoffabgabe auszulösen wird ein Magazin 11 mit einem Gaserzeugungselement 12 in die Magazinaufnahme 10 gasdicht eingeschraubt, wobei die Trennwand 9 entfernt wird und das Gaserzeugungselement 12 in die Elektrolytflüssigkeit 7 fällt. Durch die Zersetzung des Gaserzeugungselementes 12 in der Elektrolytflüssigkeit wird ein Gas gebildet, welches in dem Gaserzeugungsbereich 8 eine Druckerhöhung bewirkt. Der in dem Gaserzeugungsbereich 8 aufgebaute Druck wirkt über den Kolben 6 auf das Schmierstoffreservoir 5, so dass Schmierstoff durch den Gehäuseauslass 3 ausgepresst wird. Das Gaserzeugungselement 12 weist einen tabletten- oder kugelförmigen Körper auf, der aus zwei Basismetallen 13 und zumindest einer reaktiven Zusatzkomponente 14, 14a, 14b gebildet ist (Fig. 3a, 3b). Durch die Zersetzung der Zusatzkomponente 14, 14a, 14b in der Elektrolytflüssigkeit 7 wird für einen bezogen auf die gesamte Schmierdauer begrenzten Zeitraum eine Erhöhung der Gaserzeugungsrate bewirkt.

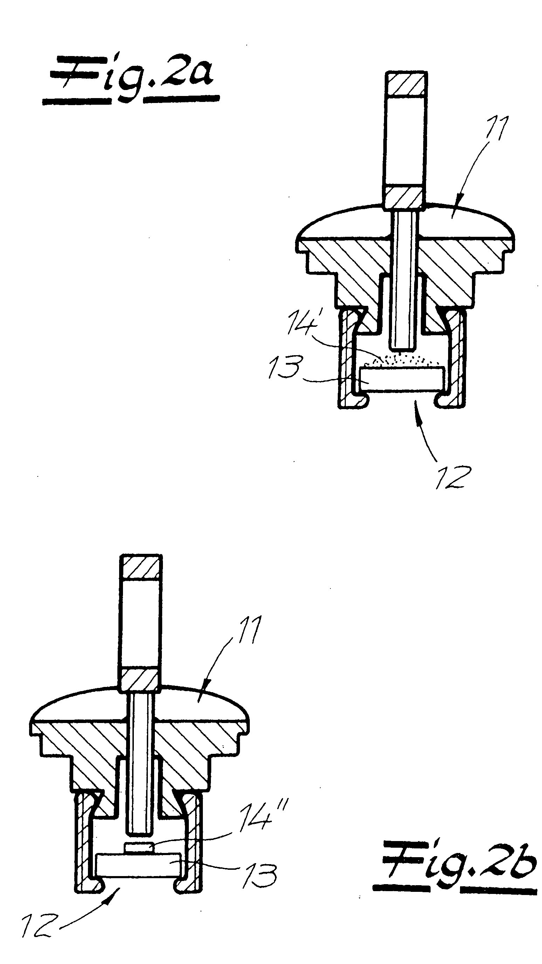

Fig. 2a und 2b zeigen alternative Ausgestaltungen, bei denen das galvanische Gaserzeugungselement 12 aus den Basismetallen 13 gebildet und als Tablette ausgeführt ist. Die Zusatzkomponente wird als körniges Material 14' bzw. separate Tablette 14" bereitgestellt. Zu Beginn der Schmierstoffabgabe werden das galvanische Gaserzeugungselement 13 und die Zusatzkomponente 14', 14" gemeinsam in die Elektrolytflüssigkeit 7 eingebracht, so dass bei den Ausgestaltungen gemäß Fig. 2a und 2b eine langsame Gaserzeugungsreaktion durch eine elektrochemische Zersetzung der Basismetalle 13 und eine schnelle Gaserzeugungsreaktion durch die Zersetzung der Zusatzkomponente 14', 14" gleichzeitig einsetzen.

Fig. 3a zeigt eine bevorzugte Ausgestaltung des Gaserzeugungselementes 12 gemäß Fig. 1. Eine erste Zusatzkomponente 14a ist an der Oberfläche des Körpers des Gaserzeugungselementes 12 angeordnet und in das Material der Basismetalle 13 eingepresst, welche einen aus einer zweiten Zusatzkomponente 14b bestehenden Kern umgeben. Fig. 3b zeigt eine alternative Ausgestaltung des Gaserzeugungselementes 12, wobei die Basismetalle 13 vollständig von der ersten Zusatzkomponente 14 umgeben sind, so dass die langsame Gaserzeugungsreaktion durch die elektrochemische Zersetzung der Basismetalle 13 erst mit einer Verzögerung nach einer zumindest teilweisen Zersetzung der ersten Zusatzkomponente 14 einsetzt.

Die Basismetalle 13 können als galvanisch aktive Metalle Zink und Molybdän oder Kupfer aufweisen, die als Pulver miteinander verpresst sind. Gegenüber Molybdän mit einem Normalpotenzial von -0,200 V ist Zink mit einem Normalpotenzial von -0,726 V das unedlere Metall und dient als Anode. Bei der elektrochemischen Zersetzung gibt die Anode Elektronen an die Kathode und positiv geladene Metallionen an die Elektrolytflüssigkeit 7 ab, wobei durch den Ladungsaustausch zwischen Kathode und Elektrolytflüssigkeit 7 Gas gebildet wird. Aufgrund ihrer Reaktionseigenschaften und der vergleichsweise einfachen Handhabbarkeit ist eine wässrige Lösung auf der Basis von Zitronensäure als saure Elektrolytflüssigkeit 7 in besonderem Maße geeignet. Insbesondere ist Zitronensäure auch bei dem Befüllen des Schmierstoffspenders 1 oder bei einem Defekt des Schmierstoffspenders 1 gegenüber anderen Elektrolytflüssigkeiten 7 vergleichsweise ungefährlich. Bei Einsatz einer sauren Elektrolytflüssigkeit bildet sich im einfachsten Fall durch den Ladungsaustausch an der Kathode gasförmiger Wasserstoff als Treibmittel für den Schmierstoffspender 1.

Um zu Beginn der Schmierstoffabgabe durch eine schnelle Gaserzeugungsreaktion den erforderlichen Betriebsdruck bereitzustellen sind bei einer sauren Elektrolytflüssigkeit 7 Magnesium und in einer alkalischen Lösung Aluminium und Silizium in besonderem Maße geeignet.

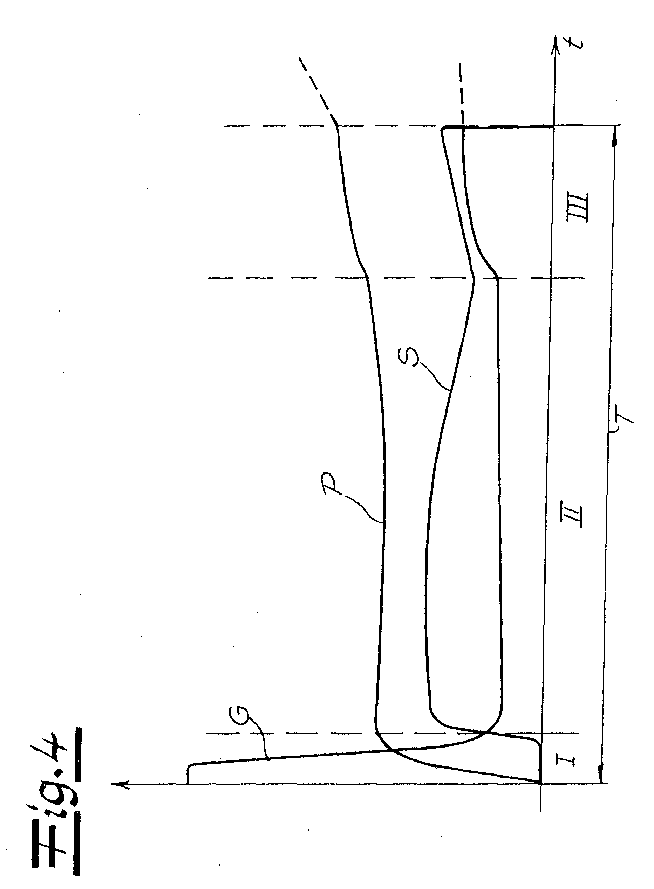

Fig. 4 zeigt exemplarisch den Verlauf der Gaserzeugungsrate G und des Druckes P in dem Gaserzeugungsbereich 8 sowie den Schmierstoffdurchfluss S durch den Gehäuseauslass 3 über die gesamte Betriebszeit, wobei sowohl für die Dauer einer Startphase I durch die erste Zusatzkomponente 14a und bei fortschreitender Entleerung des Schmierstoffreservoirs 5 zum Ende der Betriebsdauer T durch eine zweite Zusatzkomponente 14b eine Erhöhung der Gaserzeugungsrate vorgesehen ist. In einer zur Verdeutlichung zeitlich gestreckt dargestellten Startphase I erfolgt durch die Zersetzung der ersten Zusatzkomponente 14a eine schnelle Gaserzeugungsreaktion mit einer hohen Gaserzeugungsrate, so dass kurzfristig der zum Austreiben des Schmierstoffes erforderliche Druck P aufgebaut wird und Schmierstoff durch den Gehäuseauslass 3 ausgepresst wird. Nach der weitgehenden Zersetzung der ersten Zusatzkomponente 14a läuft durch die elektrochemische Zersetzung der Basismetalle 13 in einer zweiten Phase II eine langsame Gaserzeugungsreaktion ab, wobei der Schmierstoffdurchfluss S durch den Gehäuseauslass 3 zunächst in etwa konstant ist. Mit fortschreitender Entleerung des Schmierstoffreservoirs 5 wird eine Erhöhung der Viskosität des Schmierstoffes beobachtet, so dass einerseits der Schmierstoffdurchfluss S abnimmt und andererseits der Druck P in dem Gaserzeugungsbereich 8 erhöht wird. Um die Abnahme des Schmierstoffdurchflusses S zu kompensieren ist zum Ende der Schmierdauer in einer dritten Phase III eine Erhöhung der Gaserzeugungsrate durch die Zersetzung der zweiten Zusatzkomponente 14b vorgesehen. Schließlich wird die Schmierung durch die vollständige Entleerung des Schmierstoffreservoirs 5 beendet.

## Patentansprüche

1. Verfahren zur Abgabe von Schmiermittel unter Verwendung eines Schmierstoffspenders (1), der in einem Gehäuse (2) ein an einen Gehäuseauslass (3) angeschlossenes Schmierstoffreservoir (5) und einen an das Schmierstoffreservoir (5) angrenzenden, eine Elektrolytflüssigkeit aufnehmenden Gaserzeugungsbereich (8) aufweist,
wobei zum Starten der Schmierstoffabgabe ein galvanisches Gaserzeugungselement (12) in die Elektrolytflüssigkeit (7) eingebracht wird und der Schmierstoff unter dem Druck eines Gases, welches durch eine elektrochemische Zersetzung des Gaserzeugungselementes (12) entsteht, aus dem Schmierstoffreservoir (5) durch den Gehäuseauslass (3) ausgepresst wird,
**dadurch gekennzeichnet, dass** gleichzeitig mit dem galvanischen Gaserzeugungselement (12) eine Zusatzkomponente (14, 14', 14", 14a, 14b) in die Elektrolytflüssigkeit (7) eingebracht wird, die während eines bezogen auf die gesamte Betriebszeit kürzeren Zeitraumes in der Elektrolytflüssigkeit (7) unter Gaserzeugung zersetzt wird und dadurch zeitweise eine Erhöhung der Gaserzeugungsrate bewirkt.

2. Verfahren nach Anspruch 1, **dadurch gekennzeichnet, dass** die Zusatzkomponente (14, 14', 14", 14a) zu Beginn der Schmierstoffabgabe der Elektrolytflüssigkeit (7) unmittelbar ausgesetzt wird und während der Dauer einer Startphase (I) zersetzt wird.

3. Verfahren nach Anspruch 1, **dadurch gekennzeichnet, dass** die Zusatzkomponente (14b) innerhalb des Gaserzeugungselementes (12) gekapselt angeordnet wird, wobei die Zersetzung der Zusatzkomponente (14b) nach einem teilweisen Verbrauch des galvanischen Gaserzeugungselementes (12) bei fortschreitender Entleerung des Schmierstoffreservoirs (5) einsetzt.

4. Verfahren nach Anspruch 1, **dadurch gekennzeichnet, dass** eine erste Zusatzkomponente (14a) zu Beginn der Schmierstoffabgabe der Elektrolytflüssigkeit (7) unmittelbar ausgesetzt und während der Dauer einer Startphase (I) zersetzt wird und dass eine zweite Zusatzkomponente (14b) innerhalb des Gaserzeugungselementes (12) gekapselt angeordnet wird, wobei die Zersetzung der zweiten Zusatzkomponente (14b) nach einem teilweisen Verbrauch des galvanischen Gaserzeugungselementes (12) bei fortschreitender Entleerung des Schmierstoffreservoirs (5) einsetzt.

5. Gaserzeugungselement zur Durchführung des Verfahrens nach einem der Ansprüche 1 bis 4 mit einem zwei Basismetalle (13) enthaltenden Körper, wobei das edlere der beiden Basismetalle (13) in einer Elektrolytflüssigkeit (7) als Kathode und das unedlere Basismetall als Anode wirkt, so dass in der Elektrolytflüssigkeit (7) eine elektrochemische Gaserzeugungsreaktion abläuft, **dadurch gekennzeichnet, dass** der Körper eine reaktive Zusatzkomponente (14, 14a, 14b) aufweist, die in der Elektrolytflüssigkeit (7) unter Gaserzeugung in einem kürzeren Zeitraum als die Basismetalle (13) verbraucht wird.

6. Gaserzeugungselement nach Anspruch 5, **dadurch gekennzeichnet, dass** der Körper aus pulverförmig vorliegenden Metallen gepresst ist.

7. Gaserzeugungselement nach Anspruch 5 oder 6, **dadurch gekennzeichnet, dass** der Körper die Form einer Tablette oder Kugel aufweist.

8. Gaserzeugungselement nach einem der Ansprüche 5 bis 7, **dadurch gekennzeichnet, dass** die reaktive Zusatzkomponente (14, 14a) an der Oberfläche des Körpers freiliegt.

9. Gaserzeugungselement nach Anspruch 8, **dadurch gekennzeichnet, dass** die Zusatzkomponente (14) eine Außenschicht des Körpers bildet.

10. Gaserzeugungselement nach einem der Ansprüche 5 bis 8, **dadurch gekennzeichnet, dass** zumindest ein Teil der Zusatzkomponente (14b) einen von den Basismetallen (13) umschlossenen Kern des Körpers bildet.

11. Gaserzeugungselement nach Anspruch 10, **dadurch gekennzeichnet, dass** die Zusatzkomponente (14b) als körniges Material vorliegt.

12. Gaserzeugungselement nach einem der Ansprüche 5 bis 11, **dadurch gekennzeichnet, dass** die reaktive Zusatzkomponente (14, 14a, 14b) aus Magnesium, Aluminium, Silizium oder einer Mischung oder Legierung unter Verwendung mindestens eines der vorgenannten Stoffe besteht.

13. Gaserzeugungselement nach einem der Ansprüche 5 bis 10, **dadurch gekennzeichnet, dass** die Zusatzkomponente (14, 14a, 14b) aus einer Mischung aus zwei Metallen besteht, die in der Elektrolytflüssigkeit (7) Anode und Kathode bilden, und dass diese Mischung in der Elektrolytflüssigkeit (7) reaktionsfreudiger als die Anordnung aus den Basismetallen (13) ist.

14. Gaserzeugungselement nach Anspruch 13, **dadurch gekennzeichnet, dass** es sich bei den zwei Metallen der Zusatzkomponente (14, 14a, 14b) um die Basismetalle (13) handelt, wobei diese in einem reaktionsfreudigeren Mischungsverhältnis vorliegen.
